# EUROPEAN PATENT SPECIFICATION

(11) **EP 1 544 844 B1**
(45) Date of publication and mention of the grant of the patent: **25.07.2012**
(21) Application number: 04029461.3
(22) Date of filing: 13.12.2004
(51) Int. Cl.: G09G 5/36, G09G 5/399, G09G 5/395, G09G 5/39, G09G 5/00

(54) **System and method for controlling display of mobile terminal**
System und Verfahren zur Steuerung des Bildschirmes eines mobiles Endgerät.
Système et méthode pour commande de l'écran d'un terminal portable.

(30) Priority: 17.12.2003 KR 2003092655
(43) Date of publication of application: 22.06.2005
(73) Proprietor: LG Electronics, Inc., Seoul (KR)
(72) Inventor: Lim, Sund-Ki, Dongjak-Gu Seoul (KR)
(74) Representative: Katérle, Axel

(56) References cited:
- EP-A- 1 217 602
- WO-A-03/001498
- US-A1- 2003 095 125
- US-B2- 7 012 610

## Description

### BACKGROUND OF THE INVENTION

### 1. Field of the Invention

The invention relates to a mobile terminal and, more particularly, to a system and method for controlling a display unit of a mobile terminal.

### 2. Background of the Related Art

In general, screen information (data) to be displayed on a display unit of a mobile terminal is configured and stored in an external memory such as a Random Access Memory (RAM). There are two methods typically used to display the screen information stored in the external memory.

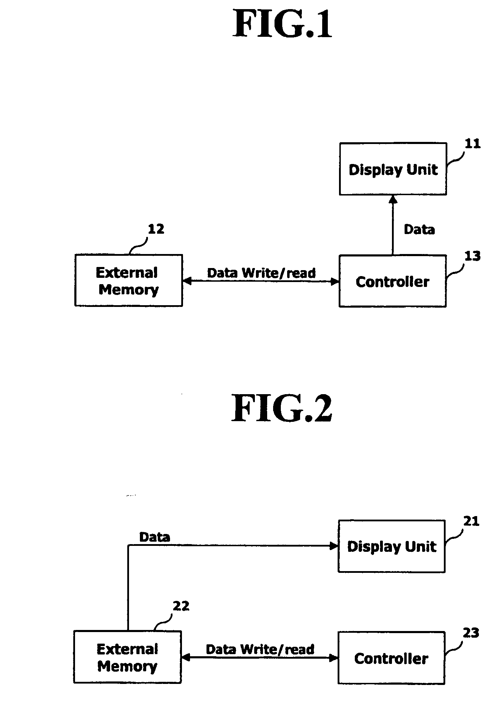

A first related art display method is shown in Figure 1. In this first method, a controller, such as a central processing unit (CPU) is used to configure and output the screen information. More specifically, as shown in Figure 1, a controller 13 records screen data in a screen output buffer (not shown) of an external memory 12, reads the screen data from the screen output buffer, and outputs the data to a display unit 11.

However, this reading/writing of display data from/into the external memory 12 and outputting data to the display unit 11 requires multiple clock cycles, thus restricting performance of the display unit 11. More specifically, by using this first display method, the reading/writing time associated with the external memory 12 and the controller 13, as well as a transfer rate between the external memory 12 and the controller 13, limit the display speed, and thus the type of display unit that can be used with the related art mobile terminal.

A second related art display method is shown in Figure 2. In this second method, screen data is configured by a controller and output by an external memory. More specifically, as shown in Figure 2, a controller 23 configures screen data in a screen output buffer (not shown) of an external memory 22, and the external memory 22 outputs the configured screen data directly to the display unit 21.

This second related art display method is advantageous in that a lesser number of clock cycles are required for the transfer of screen information, and display data can be output to the display unit 21 more quickly than in the first related art display method.

However, this second related display method suffers deficiencies similar to this first method, in that performance of the display unit is still somewhat limited by the reading/writing time required by the external memory 22, a transfer rate between the external memory 22 and the controller 23, and a transfer rate between the external memory 22 and the display unit 21.

Thus, when screen data is configured in an external memory in accordance with these related art display methods, performance of the display unit is limited by the performance of the external memory and the interface speed. That is, since the output speed of the display unit is limited by a reading/writing time from/into the external memory by the controller, a data transfer rate between the external memory and the controller, and a data transfer rate between the external memory and the display unit, the related art mobile terminal cannot take advantage of the enhanced display capabilities associated with a high performance display unit.

EP 1 411 490 A1 related to WO 03/001 498 A1 discloses a mobile telephone including a microcomputer and an image display device. The image display device comprises a display controller with an image memory as well as a drive section to drive a display section, for example a display panel. The microcontroller transfers image data to the display controller of the image display device. The display controller drives the image memory for storing screen output data in a normal mode or in an electric power saving mode.

### SUMMARY OF THE INVENTION

An object of the invention is to provide a mobile terminal which can take advantage of the enhanced display capabilities of a high performance display unit.

To achieve the above object, there is provided a mobile terminal in accordance with claim 1. Preferably, the screen output buffer may be allocated to a certain region of the internal memory.

Preferably, the internal memory is a random access memory (RAM).

To achieve the above object, there is further provided a method according to claim 6.

Writing and reading operation of the screen output buffer is performed according to a clock cycle of an internal bus of the central processing unit and the red screen output data is outputted through a display interface of the central processing unit.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements, wherein:

Figure 1 shows a related art display control system in accordance with a first related art display method;

Figure 2 shows a related art display control system in accordance with a second related art display method;

Figure 3 shows a system for controlling a display of a mobile terminal in accordance with an embodiment of the invention; and

Figure 4 is a flow chart of a method for controlling a display of a mobile terminal in accordance with an embodiment of the invention.

### DETAILED DESCRIPTION OF PREFERRED EMBODIMENTS

A system and method for controlling a high performance display unit of a mobile terminal by using a memory provided in a controller, such as, for example, a CPU, is provided. In this system and method, screen output data is configured by an internal memory of the controller, and not by an external memory of the controller, and screen output data is transmitted directly from the internal memory to the display unit. Further, the screen output buffer, which is, in the related art, allocated to the external memory of the controller, is instead allocated to the internal memory region of the controller, and an interface is provided which allows the screen output data to be output directly from the controller to the display unit. Using this system and method, screen information (data) may be configured and transmitted based on a bus clock cycle of a high speed controller so as to fully utilize the enhanced display characteristics associated with a high performance display unit.

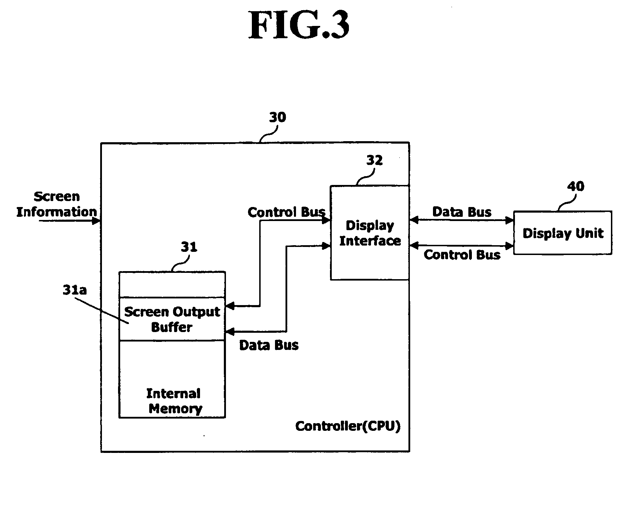

As shown in Figure 3, a display control system in accordance with an embodiment of the invention includes a controller 30 for outputting screen information (data). The screen information is stored in an internal memory 31 of the controller 30, and is output through a display interface 32. A display unit 40 is provided for displaying the screen information output by the controller 30.

A screen output buffer 31a for temporarily storing data to be output to the display unit 40 is allocated a predetermined region of the internal memory 31. The internal memory 31 may be a RAM, or any other such data storage device. Data writing/reading to/from the screen output buffer 31a is performed based on an internal bus clock cycle of the controller 30. The output buffer and internal memory may be located within a same chip, package, or module as other circuits of the controller, as well as the same printed circuit board. The display interface may also be located on the same chip, package, module, or board.

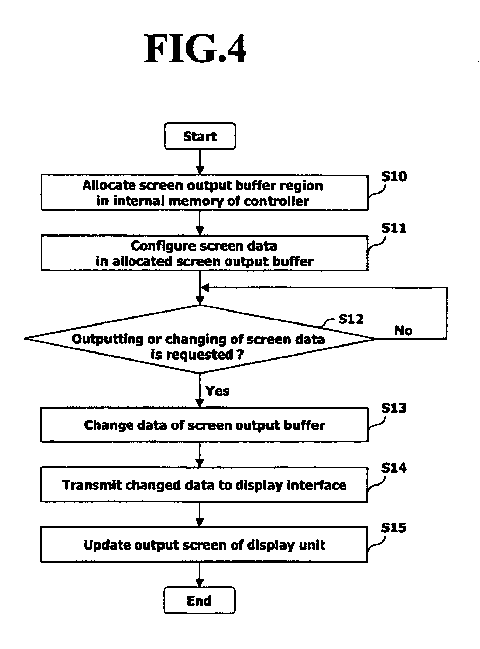

The operation of the system for controlling display of a mobile terminal constructed as described above will now be described with reference to Figures 3 and 4.

As shown in Figure 4, a predetermined region of the internal memory 31 is allocated as a region for the screen output buffer 31a (step S10). The predetermined region allocated for the screen output buffer 31a may be determined by a manufacturer.

When screen information is provided by, for example, an external source, the controller 30 configures the screen data by storing the input screen information in the screen output buffer 31a (step S11). The screen data stored in the screen output buffer 31a is continuously changed based on input screen information, and reading/writing of data from/to the screen output buffer 31a is performed based on an internal bus clock cycle associated with a control bus of the controller 30.

Thereafter, the controller 30 checks for a request to output or to change the configured screen data (step S12). If a request for outputting or changing the screen data is detected, the controller 30 changes the screen data stored in the screen output buffer 31a (step S13) and outputs the changed screen data to the display interface 32 via the screen output buffer 31a (step S14). A data bus is provided for transmitting and receiving the screen data between the internal memory 31 and the display interface 32. Once the screen data is received by the display interface 32, the display interface 32 can transmit screen data to the display unit 40. Thus, screen data transferred to the display interface 32 through the data bus after being read from the screen output buffer 31a is transferred to the display unit 40 through the data bus, thereby updating the screen of the display unit 40 (step S15).

In this manner, screen data stored in the internal memory is output directly to the external display unit based on a clock cycle of the controller. This allows for a high transfer rate of the screen data due to the high processing rate of the internal memory. Thus, screen data can be displayed and updated on a high performance display unit at an optimum speed.

As embodied and broadly described herein, the system and method for controlling a high performance display unit used for a mobile terminal have the following advantages.

That is, the internal memory of the controller includes a screen output buffer region to store screen data, and the stored screen data is directly transmitted to the display unit, thereby increasing display speed.

Therefore, the system and method for controlling a display unit of a mobile terminal as embodied and broadly described herein is capable of improving an output speed of a display unit, and of achieving optimum screen output efficiency by using a high performance display unit.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A mobile terminal, comprising:
a display unit (40) configured to display screen output data on a screen of the display; and
a central processing unit, CPU, (30) comprising:
- a display interface (32);
- an internal memory (31);
- an internal data bus coupled between the internal memory and the display interface;
- a screen output buffer (31a) within the internal memory and configured to receive and to store the screen output data,
- an internal control bus configured to transfer control information for the screen output data between the screen output buffer (31a) and the display interface (32);
wherein the CPU, display interface, internal memory, internal data bus, internal control bus, and screen output buffer are all located on a single integrated circuit chip,
the mobile terminal further comprising:
an external data bus configured to transfer the screen output data between the display interface (32) and the display unit (40); and
an external control bus configured to transfer the control information for the screen output data between the display interface (32) and the display unit (40),
wherein:
the CPU is configured to control output of the screen data stored in the screen output buffer directly to the display unit, based on one clock cycle of the internal data bus, along a signal path from the screen output buffer, via the internal data bus, the display interface, and the external data bus, to the display unit, and
writing screen data to the screen output buffer and reading screen data from the screen output buffer is performed within a single clock cycle of the internal data bus of the CPU.

2. The terminal of claim 1, wherein the screen output buffer (31a) is allocated as a predetermined region of the internal memory (31).

3. The terminal of claim 1, wherein the central processing unit (30) is configured to change the screen output data stored in the screen output buffer (31a) in response to a request to change the screen.

4. The terminal of claim 1, wherein the internal memory (31) is a random access memory.

5. The terminal of claim 1, wherein the central processing unit (30) is configured to transmit the screen output data to the display unit (40) without storing the screen output data in a memory external to the central processing unit.

6. A displaying method for a mobile terminal, wherein the mobile terminal comprises
- a display unit (40);
- a central processing unit, CPU, (30) comprising a display interface (32), an internal memory (31), an internal data bus coupled between the internal memory and the display interface, a screen output buffer (31a) within the internal memory and configured to receive and to store screen output data, and an internal control bus configured to transfer control information for the screen output data between the screen output buffer (31a) and the display interface (32);
- an external data bus configured to transfer the screen output data between the display interface (32) and the display unit (40); and
- an external control bus configured to transfer the control information for the screen output data between the display interface (32) and the display unit (40),
wherein the CPU, display interface, internal memory, internal data bus, internal control bus, and screen output buffer are all located on a single integrated circuit chip,
the method comprising:
storing the screen output data in the screen output buffer allocated within the internal memory; and
transmitting the screen output data from the screen output buffer (31a) to the display unit (40) of the terminal through the display interface (32) included in the central processing unit (30), wherein:
the CPU controls output of the screen data stored in the screen output buffer directly to the display unit, based on one clock cycle of the internal data bus, along a signal path from the screen output buffer, via the internal data bus, the display interface, and the external data bus, to the display unit, and
writing screen data to the screen output buffer and reading screen data from the screen output buffer is performed within a single clock cycle of the internal data bus of the CPU.

7. The method of claim 6, wherein the screen output buffer (31a) is included in a predetermined region of the memory.

8. The method of claim 6, further comprising:
changing the screen output data in the screen output buffer (31a) in response to a change request.

9. The method of claim 6, wherein the screen output data is transmitted to the display unit (40) without storing the screen output data in a memory external to the central processing unit (30).

## Patentansprüche

1. Mobiles Endgerät, umfassend:
- eine Anzeigeeinheit (40), welche dazu eingerichtet ist, Bildschirmausgabedaten auf einem Bildschirm der Anzeige anzuzeigen, und
- eine zentrale Verarbeitungseinheit, CPU, (30), welche umfasst:
- eine Anzeigeschnittstelle (32),
- einen internen Speicher (31),
- einen zwischen den internen Speicher und die Anzeigeschnittstelle gekoppelten internen Datenbus,
- einen Bildschirmausgabepuffer (31a) in dem internen Speicher, welcher dazu eingerichtet ist, die Bildschirmausgabedaten zu empfangen und zu speichern,
- einen internen Steuerbus, welcher dazu eingerichtet ist, Steuerinformationen für die Bildschirmausgabedaten zwischen dem Bildschirmausgabepuffer (31a) und der Anzeigeschnittstelle (32) zu transferieren,
wobei die CPU, die Anzeigeschnittstelle, der interne Speicher, der interne Datenbus, der interne Steuerbus und der Bildschirmausgabepuffer sämtlich auf einem einzigen integrierten Schaltungschip angeordnet sind,
wobei das mobile Endgerät ferner umfasst:
- einen externen Datenbus, welcher dazu eingerichtet ist, die Bildschirmausgabedaten zwischen der Anzeigeschnittstelle (32) und der Anzeigeeinheit (40) zu transferieren, und
- einen externen Steuerbus, welcher dazu eingerichtet ist, die Steuerinformationen für die Bildschirmausgabedaten zwischen der Anzeigeschnittstelle (32) und der Anzeigeeinheit (40) zu transferieren,
wobei die CPU dazu eingerichtet ist, eine direkte Ausgabe der in dem Bildschirmausgabepuffer gespeicherten Bildschirmdaten an die Anzeigeeinheit auf Basis eines Taktzyklus des internen Datenbusses längs eines Signalpfads vom Bildschirmausgabepuffer über den internen Datenbus, die Anzeigeschnittstelle und den externen Datenbus zur Anzeigeeinheit zu steuern, wobei das Schreiben von Bildschirmdaten in den Bildschirmausgabepuffer und das Lesen von Bildschirmdaten aus dem Bildschirmausgabepuffer innerhalb eines einzelnen Taktzyklus des internen Datenbusses der CPU durchgeführt werden.

2. Endgerät nach Anspruch 1, wobei der Bildschirmausgabepuffer (31a) als ein vorbestimmter Bereich des internen Speichers (31) festgelegt ist.

3. Endgerät nach Anspruch 1, wobei die zentrale Verarbeitungseinheit (30) dazu eingerichtet ist, in Antwort auf eine Anforderung, den Bildschirm zu ändern, die in dem Bildschirmausgabepuffer (31a) gespeicherten Bildschirmausgabedaten zu ändern.

4. Endgerät nach Anspruch 1, wobei der interne Speicher (31) ein Direktzugriffsspeicher ist.

5. Endgerät nach Anspruch 1, wobei die zentrale Verarbeitungseinheit (30) dazu eingerichtet ist, die Bildschirmausgabedaten zur Anzeigeeinheit (40) zu übermitteln, ohne die Bildschirmausgabedaten in einem zur zentralen Verarbeitungseinheit externen Speicher zu speichern.

6. Anzeigeverfahren für ein mobiles Endgerät, wobei das mobile Endgerät umfasst:
- eine Anzeigeeinheit (40),
- eine zentrale Verarbeitungseinheit, CPU, (30), welche eine Anzeigeschnittstelle (32), einen internen Speicher (31), einen zwischen den internen Speicher und die Anzeigeschnittstelle gekoppelten internen Datenbus, einen Bildschirmausgabepuffer (31a) innerhalb des internen Speichers, welcher dazu eingerichtet ist, Bildschirmausgabedaten zu empfangen und zu speichern, sowie einen internen Steuerbus umfasst, welcher dazu eingerichtet ist, die Steuerinformationen für die Bildschirmausgabedaten zwischen dem Bildschirmausgabepuffer (31a) und der Anzeigeschnittstelle (32) zu transferieren,
- einen externen Datenbus, welcher dazu eingerichtet ist, die Bildschirmausgabedaten zwischen der Anzeigeschnittstelle (32) und der Anzeigeeinheit (40) zu transferieren, und
- einen externen Steuerbus, welcher dazu eingerichtet ist, die Steuerinformationen für die Bildschirmausgabedaten zwischen der Anzeigeschnittstelle (32) und der Anzeigeeinheit (40) zu transferieren,
wobei die CPU, die Anzeigeschnittstelle, der interne Speicher, der interne Datenbus, der interne Steuerbus und der Bildschirmausgabepuffer sämtlich auf einem einzigen integrierten Schaltungschip angeordnet sind,
wobei das Verfahren umfasst:
- Speichern der Bildschirmausgabedaten in dem innerhalb des internen Speichers zugewiesenen Bildschirmausgabepuffer und
- Übertragen der Bildschirmausgabedaten von dem Bildschirmausgabepuffer (31a) zur Anzeigeeinheit (40) des Endgeräts über die in der zentralen Verarbeitungseinheit (30) enthaltene Anzeigeschnittstelle (32),
wobei die CPU eine direkte Ausgabe der in dem Bildschirmausgabepuffer gespeicherten Bildschirmdaten an die Anzeigeeinheit auf Basis eines Taktzyklus des internen Datenbusses längs eines Signalpfads von dem Bildschirmausgabepuffer über den internen Datenbus, die Anzeigeschnittstelle und den externen Datenbus zur Anzeigeeinheit steuert und wobei das Schreiben von Bildschirmdaten in den Bildschirmausgabepuffer und das Lesen von Bildschirmdaten aus dem Bildschirmausgabepuffer innerhalb eines einzelnen Taktzyklus des internen Datenbusses der CPU durchgeführt werden.

7. Verfahren nach Anspruch 6, wobei der Bildschirmausgabepuffer (31a) in einem vorbestimmten Bereich des Speichers enthalten ist.

8. Verfahren nach Anspruch 6, umfassend das Ändern der Bildschirmausgabedaten in dem Bildschirmausgabepuffer (31a) in Antwort auf eine Änderungsanforderung.

9. Verfahren nach Anspruch 6, wobei die Bildschirmausgabedaten zur Anzeigeeinheit (40) übermittelt werden, ohne die Bildschirmausgabedaten in einem zur zentralen Verarbeitungseinheit (30) externen Speicher zu speichern.

## Revendications

1. Terminal mobile, comprenant:
une unité d'affichage (40) configurée pour afficher des données de sortie d'écran sur un écran de l'affichage; et
unité centrale de traitement, CPU, (30) comprenant:
- une interface d'affichage (32);
- une mémoire interne (31);
- un bus de données interne couplé entre la mémoire interne et l'interface d'affichage;
- une mémoire tampon de sortie d'écran (31a) à l'intérieur de la mémoire interne et configurée pour recevoir et pour mémoriser les données de sortie d'écran;
- un bus de commande interne configuré pour transférer des informations de commande pour les données de sortie d'écran entre la mémoire tampon de sortie d'écran (31a) et l'interface d'affichage (32);
dans lequel la CPU, l'interface d'affichage, la mémoire interne, le bus de données interne, le bus de commande interne et la mémoire tampon de sortie d'écran sont tous placés sur un microcircuit intégré unique,
le terminal mobile comprenant en outre:
un bus de données externe configuré pour transférer les données de sortie d'écran entre l'interface d'affichage (32) et l'unité d'affichage (40); et
un bus de commande externe configuré pour transférer les informations de commande pour les données de sortie d'écran entre l'interface d'affichage (32) et l'unité d'affichage (40),
dans lequel:
la CPU est configurée pour commander la sortie des données d'écran mémorisées dans la mémoire tampon de sortie d'écran directement vers l'unité d'affichage, sur la base d'un cycle d'horloge du bus de données interne, le long d'un parcours de signal allant de la mémoire tampon de sortie d'écran, via le bus de données interne, l'interface d'affichage, et le bus de données externe, à l'unité d'affichage, et l'écriture des données d'écran sur la mémoire tampon de sortie d'écran et la lecture des données d'écran à partir de la mémoire tampon de sortie d'écran sont exécutées pendant un cycle d'horloge unique du bus de données interne de la CPU.

2. Terminal selon la revendication 1, dans lequel la mémoire tampon de sortie d'écran (31a) est attribuée en tant que région prédéterminée de la mémoire interne (31).

3. Terminal selon la revendication 1, dans lequel l'unité centrale de traitement (30) est configurée pour changer les données de sortie d'écran mémorisées dans la mémoire tampon de sortie d'écran (31a) en réponse à une demande de changement d'écran.

4. Terminal selon la revendication 1, dans lequel la mémoire interne (31) est une mémoire vive.

5. Terminal selon la revendication 1, dans lequel l'unité centrale de traitement (30) est configurée pour transmettre les données de sortie d'écran vers l'unité d'affichage (40) sans mémoriser les données de sortie d'écran dans une mémoire externe vers l'unité centrale de traitement.

6. Procédé d'affichage pour un terminal mobile, dans lequel le terminal mobile comprend
- une unité d'affichage (40);
- unité centrale de traitement CPU (30) comprenant une interface d'affichage (32), une mémoire interne (31), un bus de données interne couplé entre la mémoire interne et l'interface d'affichage;
- une mémoire tampon de sortie d'écran (31a) à l'intérieur de la mémoire interne et configurée pour recevoir et pour mémoriser les données de sortie d'écran, et
- un bus de commande interne configuré pour transférer des informations de commande pour les données de sortie d'écran entre la mémoire tampon de sortie d'écran (31a) et l'interface d'affichage (32);
- un bus de données externe configuré pour transférer les données de sortie d'écran entre l'interface d'affichage (32) et l'unité d'affichage (40); et
- un bus de commande externe configuré pour transférer les informations de commande pour les données de sortie d'écran entre l'interface d'affichage (32) et l'unité d'affichage (40),
dans lequel la CPU, l'interface d'affichage, la mémoire interne, le bus de données interne, le bus de commande interne et la mémoire tampon de sortie d'écran sont tous placés sur un microcircuit intégré unique,
le procédé comprenant les étapes consistant à:
mémoriser les données de sortie d'écran dans la mémoire tampon de sortie d'écran attribuée à l'intérieur de la mémoire interne; et
transmettre les données de sortie d'écran de la mémoire tampon de sortie d'écran (31a) à l'unité d'affichage (40) du terminal par l'intermédiaire de l'interface d'affichage (32) contenu dans l'unité centrale de traitement (30), dans lequel:
la CPU commande la sortie des données d'écran mémorisées dans la mémoire tampon de sortie d'écran directement vers l'unité d'affichage, sur la base d'un cycle d'horloge du bus de données interne, le long d'un parcours de signal allant de la mémoire tampon de sortie d'écran, via le bus de données interne, l'interface d'affichage, et le bus de données externe, à l'unité d'affichage, et
l'écriture des données d'écran sur la mémoire tampon de sortie d'écran et la lecture des données d'écran à partir de la mémoire tampon de sortie d'écran sont exécutées pendant un cycle d'horloge unique du bus de données interne de la CPU.

7. Procédé selon la revendication 6, dans lequel la mémoire tampon de sortie d'écran (31a) est contenue dans une région prédéterminée de la mémoire.

8. Procédé selon la revendication 6, comprenant en outre l'étape consistant à:
changer les données de sortie d'écran dans la mémoire tampon de sortie d'écran (31a) en réponse à une demande de changement.

9. Procédé selon la revendication 6, dans lequel les données de sortie d'écran sont transmises vers l'unité d'affichage (40) sans mémoriser les données de sortie d'écran dans une mémoire externe vers l'unité centrale de traitement (30).
